# EUROPÄISCHE PATENTSCHRIFT

(11) **EP 1 082 916 B1**
(45) Veröffentlichungstag und Bekanntmachung des Hinweises auf die Patenterteilung: **19.03.2003**
(21) Anmeldenummer: 00117791.4
(22) Anmeldetag: 18.08.2000
(51) Int. Cl.: A24C 5/32, B65G 51/02

(54) **Rohrleitungsverbindung zum pneumatischen Überführen von stabförmigen Artikeln der tabakverarbeitenden Industrie**
Pipeline for the pneumatic transfer of rod-like articles in the tobacco industry
Canalisation de transfert pneumatique d'articles en forme de tige de l'industrie du tabac

(30) Priorität: 31.08.1999 DE 19941268
(43) Veröffentlichungstag der Anmeldung: 14.03.2001
(73) Patentinhaber: Hauni Maschinenbau AG, 21033 Hamburg (DE)
(72) Erfinder: Haul, Michael, 21529 Kröppelshagen (DE)

(56) Entgegenhaltungen:
- WO-A-97/16365
- WO-A-99/22611
- DE-A- 2 929 406
- DE-A- 3 103 060
- "CONVEYOR SYSTEM" RESEARCH DISCLOSURE,GB,INDUSTRIAL OPPORTUNITIES LTD. HAVANT, Nr. 390, 1. Oktober 1996 (1996-10-01), Seiten 671-672, XP000639939 ISSN: 0374-4353

## Beschreibung

Die Erfindung betrifft eine Rohrleitungsverbindung zum pneumatischen Überführen von stabförmigen Artikeln der tabakverarbeitenden Industrie zwischen einer einzigen Sendestation und einer Einfach-Empfangsstation.

Bei der Herstellung von Filterzigaretten kann die Filterherstellung aus produktionstechnischen Gründen räumlich getrennt von der Zigarettenherstellung erfolgen. Die Zigarettenfilter werden dabei als Filterstäbe von mehrfacher Gebrauchslänge über Beschickungsrohre pneumatisch zu den Filteransetzmaschinen gefördert.

Infolge der Leistungssteigerung der Filterbeschickungseinrichtungen konnte die Versorgung einer Filteransetzmaschine wirtschaftlicher betrieben werden, indem eine bisher übliche Doppelversorgung einer Filteransetzmaschine über eine mit zwei Rohrleitungen verbundene doppelte Empfangsstation gemäß der DE 29 29 406 A durch eine einfache Empfangsstation mit nur einer Rohrleitung unter Einsparung eines Sendemoduls ersetzt werden konnte.

Der Erfindung liegt die Aufgabe zugrunde, die Betriebssicherheit derartiger Überführungseinrichtungen langfristig zu gewährleisten bzw. durch Störungen in der Überführungsstrecke bedingte Ausfallzeiten zu vermeiden. Hier führt insbesondere ein Rohrstau in der Überführungsleitung sofort zu einem Versorgungsnotstand und damit zum Stillstand der Empfängermaschine.

Diese Aufgabe wird erfindungsgemäß gelöst durch wenigstens zwei wahlweise die Sendestation mit der Empfangsstation verbindende Rohrleitungen, wobei die Rohrleitungen über zwei ausgangsseitig der Sendestation bzw. eingangsseitig der Empfangsstation angeordnete synchron umschaltbare Rohrweichen mit einer gemeinsamen Ausgangsleitung und einer gemeinsamen Eingangsleitung der Sendestation bzw. Empfangsstation verbindbar sind.
Eine bevorzugte Ausgestaltung besteht darin, dass die Rohrweichen einen relativ zu einem starren Rohrleitungsanschlussgehäuse um eine zentrale Achse verdrehbaren Verbindungsteller aufweisen. Größte Funktionssicherheit mit geringstmöglichem konstruktiven Aufwand wird gemäß einer Weiterbildung dadurch möglich, dass der Verbindungsteller der Sendestation eine die gemeinsame Ausgangsleitung über eine flexible Anschlussleitung jeweils mit einer der Rohrleitungen verbindende Durchgangsbohrung aufweist.
Um eine Entleerung einer jeweils verstopften Rohrleitung zu ermöglichen, ist weiterhin vorgesehen, dass der Verbindungsteller der Sendestation mit zwei jeweils eine der Rohrleitungen mit einem Auffangbehälter verbindenden Freiblasbohrungen versehen ist, wobei zweckmäßigerweise die Durchgangs- und Freiblasbohrungen auf einem gemeinsamen Kreisbogenabschnitt des Verbindungstellers angeordnet sind, derart, dass die beiden Freiblasbohrungen die mittige Durchgangsbohrung symmetrisch zwischen sich einschließen.
Es ist außerdem vorgesehen, dass der Verbindungsteller der Empfangsstation eine die gemeinsame Eingangsleitung über eine flexible Anschlussleitung jeweils mit einer der Rohrleitungen verbindende Durchgangsbohrung aufweist.
Eine praktisch synchron mit der Umschaltung zwischen den beiden Rohrleitungen erfolgende effektive Beseitigung des Rohrstaus wird gemäß einer vorteilhaften Ausgestaltung dadurch erreicht, dass der Verbindungsteller der Empfangsstation mit einer mit einem flexiblen Blasluftanschluss verbundenen, jeweils eine der Rohrleitungen entgegen der Artikelförderrichtung mit Reinigungsluft beaufschlagenden Ringnut ausgestattet ist.

Der mit der Erfindung erzielte Vorteil besteht darin, dass im Störungsfall in einer der beiden Rohrleitungen sofort bzw. automatisch auf die jeweils in Reserve gehaltene freie Rohrleitung umgeschaltet und gleichzeitig die verstopfte Rohrleitung wieder durchgängig gemacht werden kann. Damit ist praktisch eine ununterbrochene Versorgung der angeschlossenen Empfängermaschine gewährleistet.

Die Erfindung wird nachfolgend anhand eines in der Zeichnung dargestellten Ausführungsbeispiels näher erläutert.

Hierbei zeigen:
- Figur 1: eine schematisch dargestellte Rohrleitungsverbindung zwischen einer Sendestation und einer Empfangsstation für Filterstäbe,
- Figur 2: eine entlang der Linie A-A gemäß Figur 4 im Teilschnitt dargestellte Rohrweiche der Sendestation,
- Figur 3: eine teilgeschnittene Seitenansicht der Rohrweiche gemäß Figur 2,
- Figuren 4 und 5: unterschiedliche Arbeitsstellungen der Rohrweiche in der Draufsicht entlang der Linie B-B gemäß Figur 2,
- Figur 6: eine entlang der Linie C-C gemäß Figur 8 teilgeschnittene Darstellung einer Rohrweiche der Empfangsstation,
- Figur 7: eine Seitenansicht der Rohrweiche gemäß Figur 6 und
- Figuren 8 und 9: unterschiedliche Arbeitsstellungen der Rohrweiche in der Draufsicht entlang der Linie D-D gemäß Figur 6.

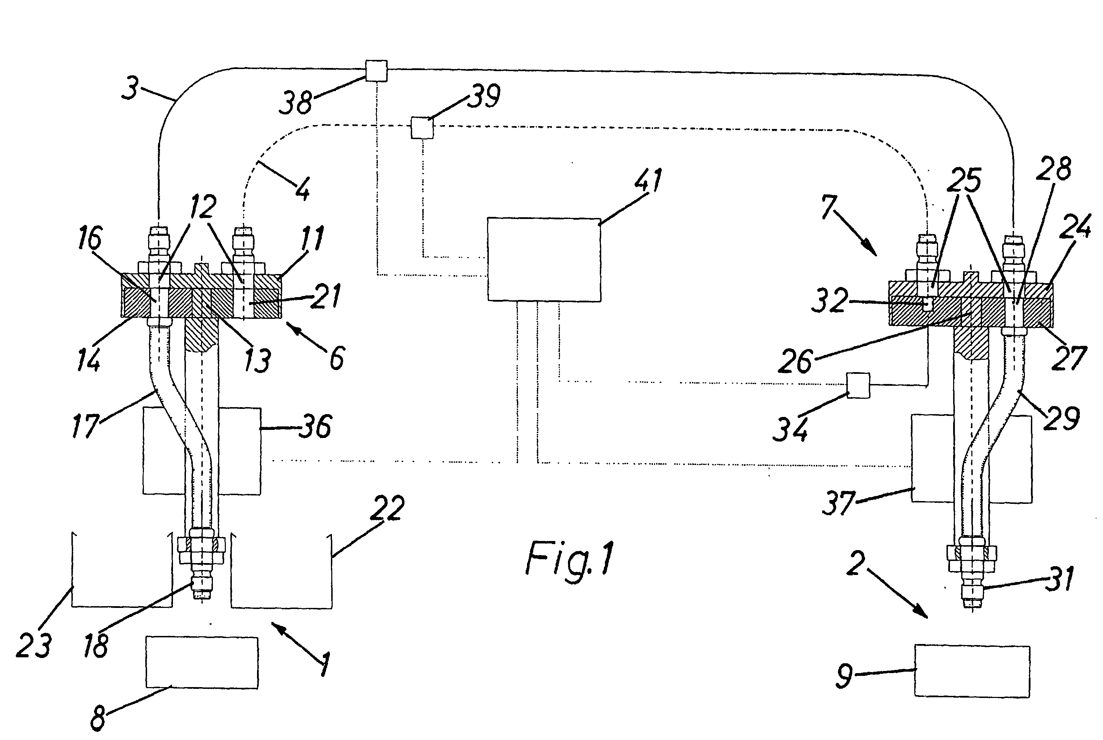

Gemäß Figur 1 sind eine Sendestation 1 und eine Empfangsstation 2 für nicht weiter dargestellte Filterstäbe der tabakverarbeitenden Industrie durch zwei Rohrleitungen 3 und 4 über jeweils eine Rohrweiche 6 am Ausgang der Sendestation 1 und eine Rohrweiche 7 am Eingang der Empfangsstation 2 miteinander verbunden.

Die Sendestation 1 ist durch eine schematisch angedeutete Sendeeinheit 8 des Typs "FILTROMAT" der Anmelderin und die Empfangsstation 2 durch eine schematisch angedeutete Filteransetzmaschine 9 des Typs "MAX" der Anmelderin symbolisiert.
Die Rohrweiche 6 der Sendestation 1 weist eine starres Rohranschlussgehäuse 11 auf, in das Anschlussstutzen 12 der beiden Rohrleitungen 3, 4 eingelassen sind.

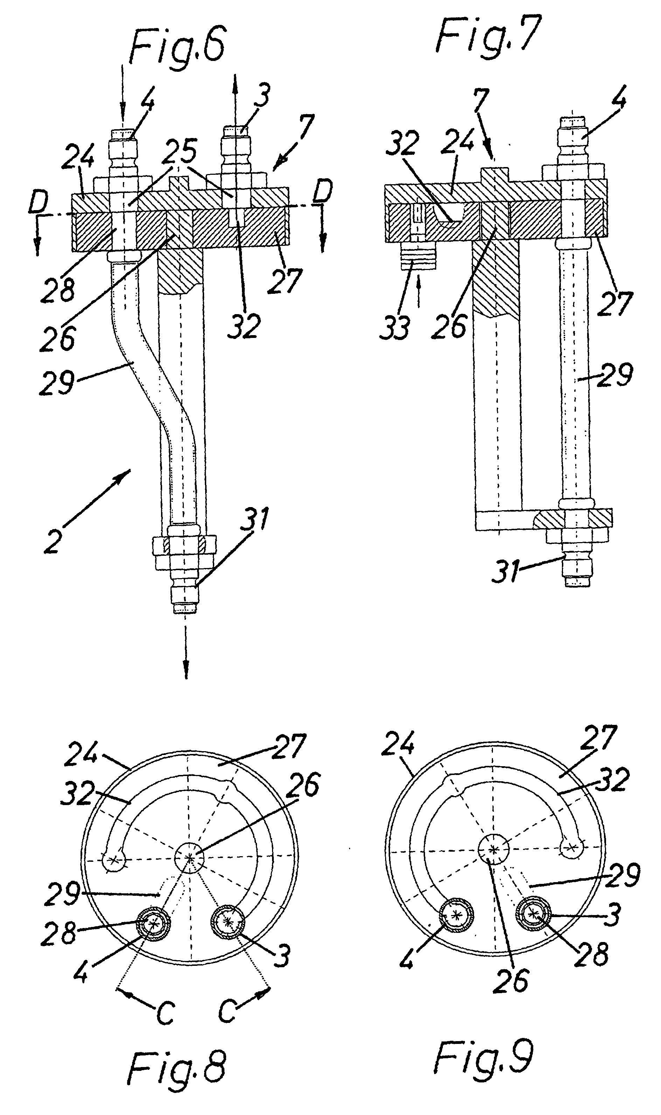

Des weiteren ist die Rohrweiche 6 mit einem um eine zentrale Achse 13 verdrehbaren Verbindungsteller 14 versehen, welcher über eine Durchgangsbohrung 16 und eine flexible Anschlussleitung 17 die beiden Rohrleitungen 3, 4 alternativ mit einer gemeinsamen Ausgangsleitung 18 der Sendestation 1 verbindet.
Außerdem ist der Verbindungsteller 14 mit zwei Freiblasbohrungen 19, 21 versehen, die alternativ eine Verbindung zwischen den Rohrleitungen 3, 4 und zugeordneten Auffangbehältem 22 bzw. 23 herstellen.
Die Rohrweiche 7 auf der Empfängerseite weist ebenfalls eine starres Rohranschlussgehäuse 24 auf, in das Anschlussstutzen 25 der beiden Rohrleitungen 3, 4 eingelassen sind.
Gleichfalls ist die Rohrweiche 7 mit einem um eine zentrale Achse 26 verdrehbaren Verbindungsteller 27 versehen, welcher über eine Durchgangsbohrung 28 und eine flexible Anschlussleitung 29 die beiden Rohrleitungen 3, 4 alternativ mit einer gemeinsamen Eingangsleitung 31 der Empfangsstation 2 verbindet.
Der Verbindungsteller 27 ist mit einer sich über einen Teilkreis erstreckenden Ringnut 32 versehen, in die ein flexibler Blasluftanschluss 33 gemäß Figur 7 einmündet, der über ein Rückblasventil 34 mit Blasluft beaufschlagbar ist.
Die Verbindungsteller 14 und 27 sind jeweils mit einem pneumatisch betriebenen Drehantriebsmittel 36 bzw. 37 versehen.
Die beiden Rohrleitungen 3 und 4 sind jeweils mit einem Stausensor 38 bzw. 39 ausgestattet. Die Stausensoren 38, 39, das Rückblasventil 34 und die Drehantriebsmittel 36, 37 sind steuerungsmäßig über eine Steuereinheit 41 miteinander verknüpft.

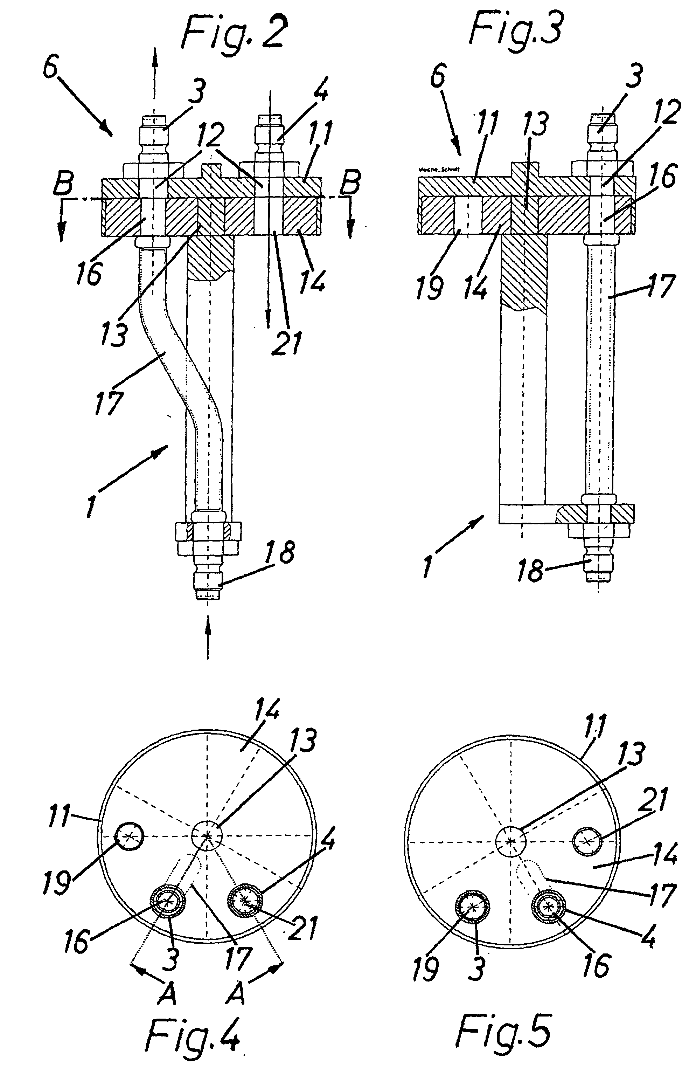

Die Wirkungsweise der Überführungseinrichtung ist wie folgt:
Im Normalzustand werden Filterstäbe über eine der beiden Rohrleitungen 3 oder 4 von der Sendestation 1 zur Empfangsstation 2 überführt. Gemäß den Figuren 1, 4 und 9 besteht eine derartige Übertragungsverbindung zwischen der Sende- und Empfangsstation über die Rohrleitung 3, wobei die beiden Verbindungsteller 14, 27 eine Drehstellung einnehmen, in der ihre Durchgangsbohrungen 16 bzw. 28 über die flexiblen Anschlussleitungen 17 bzw. 29 die Rohrleitung 3 mit der Ausgangsleitung 18 der Sendestation 1 bzw. mit der Eingangsleitung 31 der Empfangsstation 2 verbinden, während die Freiblasbohrung 21 des Verbindungstellers 14 mit der "Stand by" gehaltenen Rohrleitung 4 verbunden ist, deren empfangsseitiges Ende am Anschlussstutzen 25 gemäß den Figuren 1 und 9 mit der Ringnut 32 in Verbindung steht. Falls eine vorherige staubedingte Umschaltung von der Rohrleitung 4 auf die Rohrleitung 3 erfolgt ist, wurde die Rohrleitung durch Beaufschlagung mit Reinigungsblasluft entgegen der normalen Förderrichtung freigeblasen, indem die Filterstäbe über die Freiblasbohrung 21 des Verbindungstellers 14 gemäß den Figuren 1 und 4 in den Auffangbehälter 22 ausgeblasen wurden.
Wenn der Stausensor 38 eine Verstopfung in der aktiven Rohrleitung 3 feststellt, wird ein entsprechendes Signal an die Steuereinheit 41 geleitet, welche synchron Signale zur rotativen Umschaltung der Verbindungsteller 14 und 27 auf die Drehantriebsmittel 36 bzw. 37 sowie zur Aktivierung des Rückblasventils 34 abgibt. Bei diesen in den Figuren 5 und 8 dargestellten Umschaltpositionen der Verbindungsteller 14 und 27 fluchtet die Freiblasbohrung 19 des Verbindungstellers 14 mit der verstopften Rohrleitung 3 über dem Auffangbehälter 23. Das entgegengesetzte Ende der Rohrleitung 3 hat über den Anschlussstutzen 25 eine Verbindung mit der Ringnut 32, so dass in der Rohrleitung 4 befindliche Filterstäbe durch das aktivierte Rückblasventil 34 in den Auffangbehälter 23 überführt werden, während nunmehr über die durchgängige Verbindung der Rohrleitung 4 praktisch ohne Unterbrechung Filterstäbe von der Sendestation 1 zur Empfangsstation 2 überführt werden.

## Patentansprüche

1. Rohrleitungsverbindung zum pneumatischen Überführen von stabförmigen Artikeln der tabakverarbeitenden Industrie zwischen einer einzigen Sendestation und einer Einfach-Empfangsstation, **gekennzeichnet durch** wenigstens zwei wahlweise die Sendestation (1) mit der Empfangsstation (2) verbindende Rohrleitungen (3, 4), wobei die Rohrleitungen über zwei ausgangsseitig der Sendestation bzw. eingangsseitig der Empfangsstation angeordnete synchron umschaltbare Rohrweichen (6 bzw. 7) mit einer gemeinsamen Ausgangsleitung (18) und einer gemeinsamen Eingangsleitung (31) der Sendestation bzw. der Empfangsstation verbindbar sind.

2. Rohrleitungsverbindung nach Anspruch 1, **dadurch gekennzeichnet, dass** die Rohrweichen (6, 7) einen relativ zu einem starren Rohrleitungsanschlussgehäuse (11 bzw. 24) um eine zentrale Achse (13 bzw. 26) verdrehbaren Verbindungsteller (14 bzw. 27) aufweisen.

3. Rohrleitungsverbindung nach Anspruch 2, **dadurch gekennzeichnet, dass** der Verbindungsteller (14) der Sendestation (1) eine die gemeinsame Ausgangsleitung (18) über eine flexible Anschlussleitung (17) jeweils mit einer der Rohrleitungen (3 bzw. 4) verbindende Durchgangsbohrung (16) aufweist.

4. Rohrleitungsverbindung nach Anspruch 2 oder 3, **dadurch gekennzeichnet, dass** der Verbindungsteller (14) der Sendestation (1) mit zwei jeweils eine der Rohrleitungen (3 bzw. 4) mit einem Auffangbehälter (22 bzw. 23) verbindenden Freiblasbohrungen (19, 21) versehen ist.

5. Rohrleitungsverbindung nach Anspruch 3 oder 4, **dadurch gekennzeichnet, dass** die Durchgangs- und Freiblasbohrungen (16, 19, 21) auf einem gemeinsamen Kreisbogenabschnitt des Verbindungstellers (14) angeordnet sind, wobei die beiden Freiblasbohrungen (19, 21) die mittige Durchgangsbohrung (16) symmetrisch zwischen sich einschließen.

6. Rohrleitungsverbindung nach Anspruch 2, **dadurch gekennzeichnet, dass** der Verbindungsteller (27) der Empfangsstation (2) ein die gemeinsame Eingangsleitung (31) über eine flexible Anschlußleitung (29) jeweils mit einer der Rohrleitungen (3 bzw. 4) verbindende Durchgangsbohrung (28) aufweist.

7. Rohrleitungsverbindung nach Anspruch 2 oder 6, **dadurch gekennzeichnet, dass** der Verbindungsteller (27) der Empfangsstation (2) mit einer mit einem flexiblen Blasluftanschluss (33) verbundenen, jeweils eine der Rohrleitungen (3 bzw. 4) entgegen der Artikelförderrichtung mit Reinigungsluft beaufschlagenden Ringnut (32) ausgestattet ist.

## Claims

1. A pipeline connexion for the pneumatic transfer of rod-shaped articles of the tobacco-processing industry between a single dispatching station and a simple receiving station, **characterized by** at least two pipelines (3, 4) optionally connecting the dispatching station (1) to the receiving station (2), wherein the pipelines can be connected to a common outlet line (18) and a common inlet line'(31) of the dispatching station and the receiving station respectively by way of two tube switches (6 and 7 respectively) which are arranged at the outlet side of the dispatching station and at the inlet side of the receiving station respectively and which can be switched over in synchronism.

2. A pipeline connexion according to Claim 1, **characterized in that** the tube switches (6, 7) have a connecting plate (14 and 27 respectively) which is rotatable about a central shaft (13 and 26 respectively) relative to a rigid pipeline attachment housing (11 and 24 respectively).

3. A pipeline connexion according to Claim 2, **characterized in that** the connecting plate (14) of the dispatching station (1) has a through-bore (16) connecting the common outlet line (18) by way of a flexible attachment line (17) to one of the pipelines (3 and 4 respectively) in each case.

4. A pipeline connexion according to Claim 2 or 3, **characterized in that** the connecting plate (14) of the dispatching station (1) is provided with two free-blasting bores (19, 21) connecting one of the pipelines (3 and 4 respectively) to a collecting container (22 and 23 respectively) in each case.

5. A pipeline connexion according to Claim 3 or 4, **characterized in that** the through-bore and free-blasting bores (16, 19, 21) are arranged on a common arcuate portion of the connecting plate (14), wherein the two free-blasting bores (19, 21) enclose the middle through-bore (16) symmetrically between themselves.

6. A pipeline connexion according to Claim 2, **characterized in that** the connecting plate (27) of the receiving station (2) has a through-bore (28) connecting the common inlet line (31) by way of a flexible attachment line (29) to one of the pipelines (3 and 4 respectively) in each case.

7. A pipeline connexion according to Claim 2 or 6, **characterized in that** the connecting plate (27) of the receiving station (2) is provided with an annular groove (32) which is connected to a flexible blast-air attachment (33) and which acts upon one of the pipelines (3 and 4 respectively) with cleaning air contrary to the conveying direction of the articles in each case.

## Revendications

1. Canalisation pour le transfert pneumatique d'articles en forme de tige de l'industrie de transformation du tabac, entre une seule station émettrice et une station réceptrice simple, **caractérisée par** au moins deux conduits (3, 4) reliant sélectivement la station émettrice (1) à la station réceptrice (2), les conduits étant raccordables à une conduite de sortie commune (18) et une conduite d'entrée commune (31), respectivement de la station émettrice et de la station réceptrice, par l'intermédiaire de deux aiguillages tubulaires (6 et 7) permutables en synchronisme et disposés l'un côté sortie de la station émettrice et l'autre côté entrée de la station réceptrice.

2. Canalisation selon la revendication 1, **caractérisée en ce que** les aiguillages tubulaires (6, 7) disposent d'un plateau de connexion rotatif (14 ou 27) tournant autour d'un axe central (13 ou 26) par rapport à un bâti rigide de raccordement (11 et 24) des conduits.

3. Canalisation selon la revendication 2, **caractérisée en ce que** le plateau de connexion (14) de la station émettrice (1) dispose d'un alésage de passage (16) raccordant la conduite de sortie commune (18) à l'un des conduits (3 ou 4), par l'intermédiaire d'une conduite de raccordement flexible (17).

4. Canalisation selon la revendication 2 ou 3, **caractérisée en ce que** le plateau de connexion (14) de la station émettrice (1) est équipé de deux alésages de purge (19, 21) reliant chacun l'un des conduits (3 ou 4) à un récipient collecteur (22 ou 23).

5. Canalisation selon la revendication 3 ou 4, **caractérisée en ce que** les alésages de passage et de purge (16, 19, 21) sont disposés sur un secteur d'arc de cercle commun du plateau de connexion (14), les deux alésages de purge (19, 21) entourant alors de manière symétrique l'alésage de passage central (16).

6. Canalisation selon la revendication 2, **caractérisée en ce que** le plateau de connexion (27) de la station réceptrice (2) dispose d'un alésage de passage (28) reliant la conduite d'entrée commune (31) à l'un des conduits (3 ou 4) par l'intermédiaire d'une conduite de raccordement flexible (29).

7. Canalisation selon la revendication 2 ou 6, **caractérisée en ce que** le plateau de connexion (27) de la station réceptrice (2) est équipé d'une gorge annulaire (32) reliée à un raccord flexible d'air de purge (33) appliquant dans l'un des conduits (3 ou 4) de l'air de nettoyage insufflé en sens opposé à la direction de transport des articles.
